# EUROPEAN PATENT APPLICATION

(11) **EP 2 051 493 A1**
(43) Date of publication of application: **22.04.2009**
(21) Application number: 08166579.6
(22) Date of filing: 14.10.2008
(51) Int. Cl.: H04M 1/725

(54) **Mobile terminal aware of externally connected device and control method for the same**

(30) Priority: 15.10.2007 KR 20070103687
(71) Applicant: Samsung Electronics Co., Ltd., Suwon-si Gyeonggi-do (KR)
(72) Inventor: Sung, Jung Pil, c/o Samsung Electronics Co., Ltd., Gyeonggi-do (KR)
(74) Representative: Harrison Goddard Foote

(57) **Abstract**

A mobile terminal controlling an external device according to its type and a control method for the same are disclosed. The mobile terminal can automatically initiate battery charging or communication according to the type of an attached external device. The external device can be, for example, a charger or storage device. When a charger is attached, the mobile terminal automatically performs battery charging using the charger. When an external storage device is attached, the mobile terminal automatically performs serial communication with the external storage device.

## Description

### CROSS-REFERENCE TO RELATED APPLICATION(S) AND CLAIM OF PRIORITY

The present application claims priority to an application entitled "MOBILE TERMINAL AWARE OF EXTERNAL DEVICE AND CONTROL METHOD FOR THE SAME" filed in the Korean Intellectual Property Office on October 15, 2007 and assigned Serial No. 2007-0103687, the contents of which are incorporated herein by reference.

### TECHNICAL FIELD OF THE INVENTION

The present invention relates generally to a mobile terminal and, more particularly, to a mobile terminal that is aware of external devices and control method for the same wherein the mobile terminal automatically switches between a charge mode and communication mode according to the type of a connected external device.

### BACKGROUND OF THE INVENTION

Modern mobile terminals have been widely utilized in various fields because of high portability, large storage capacity for various application programs, and high usability. In particular, mobile communication terminals enabling voice communication while in motion have won over numerous users or subscribers.

Early mobile terminals had sizes bulky enough to stabilize their batteries and other components, and were inconvenient for users to carry and were portable only in name. However, recent advances in components and batteries have made it possible to develop light, small and thin mobile terminals.

For charging, a cable can be provided to connect a charger and a mobile terminal together, and a connector interface can be provided on the mobile terminal for cable connection. The connector interface can be used both as a path connecting to the charger and as a path supporting universal serial bus (USB) communication.

Whereas the number of pins in a connector of a mobile terminal is fixed, the number of external devices connectable to the connector gradually increases. Hence, the connector pins of the mobile terminal may have to be shared among different external devices. In view of the fact that different external devices require the mobile terminal to operate differently, the sharing of connector pins may cause severe damage to the control circuit of the mobile terminal or to the external devices. Thus, it is necessary to provide a mobile terminal with a method and apparatus that can adaptably control a connected external device according to the type of the external device.

### SUMMARY OF THE INVENTION

To address the above-discussed deficiencies of the prior art, it is a primary object to provide a mobile terminal and control method for the same that can adaptably control a connected external device according to the type of the external device.

In accordance with an exemplary embodiment of the present invention, there is provided a method of controlling a mobile terminal, including: checking for an attachment of an external device; sending, when an external device is attached, a dummy data to the external device; checking for a presence of a response associated with the dummy data from the external device; determining a type of the external device on the basis of the presence of a response; and activating one of a charge mode and a communication mode according to the type of the external device.

In accordance with another exemplary embodiment of the present invention, there is provided a method of controlling a mobile terminal, including: checking for an attachment of an external device; sending, when an external device is attached, a signal of a first phase through one of a first signal line and second signal line connected to the external device; sensing a second phase of a signal on the other signal line; comparing the first phase with the second phase; determining a type of the external device according to an equality between the first phase and second phase; and activating one of a charge mode and a communication mode according to the type of the external device.

In accordance with another exemplary embodiment of the present invention, there is provided a mobile terminal including: a connector unit to which an external device is attached; and a control unit sending a preset signal to the external device attached to the connector unit, determining a type of the external device on a basis of a change in the sent signal, and activating one of a charge mode and a communication mode according to the type of the external device.

In a feature of the present invention, a mobile terminal and control method for the same automatically detecting attachment of an external device and driving the external device according to the type thereof. This facilitates efficient and convenient utilization of an external device connected to the mobile terminal.

Before undertaking the DETAILED DESCRIPTION OF THE INVENTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:

FIGURE 1 is a schematic diagram illustrating an external storage device and charger connectable to a mobile terminal;

FIGURE 2 is a block diagram illustrating a mobile terminal according to an exemplary embodiment of the present invention;

FIGURE 3 is a block diagram of an embodiment of a control unit and connector unit shown in FIGURE 2 according to the present invention;

FIGURE 4 is a block diagram of another embodiment of a control unit and connector unit shown in FIGURE 2 according to the present invention;

FIGURE 5 is a flow chart illustrating a method of controlling a mobile terminal according to the type of a connected external device according to another exemplary embodiment of the present invention; and

FIGURE 6 is a flow chart illustrating another method of controlling a mobile terminal according to the type of a connected external device according to another exemplary embodiment of the present invention.

### DETAILED DESCRIPTION OF THE INVENTION

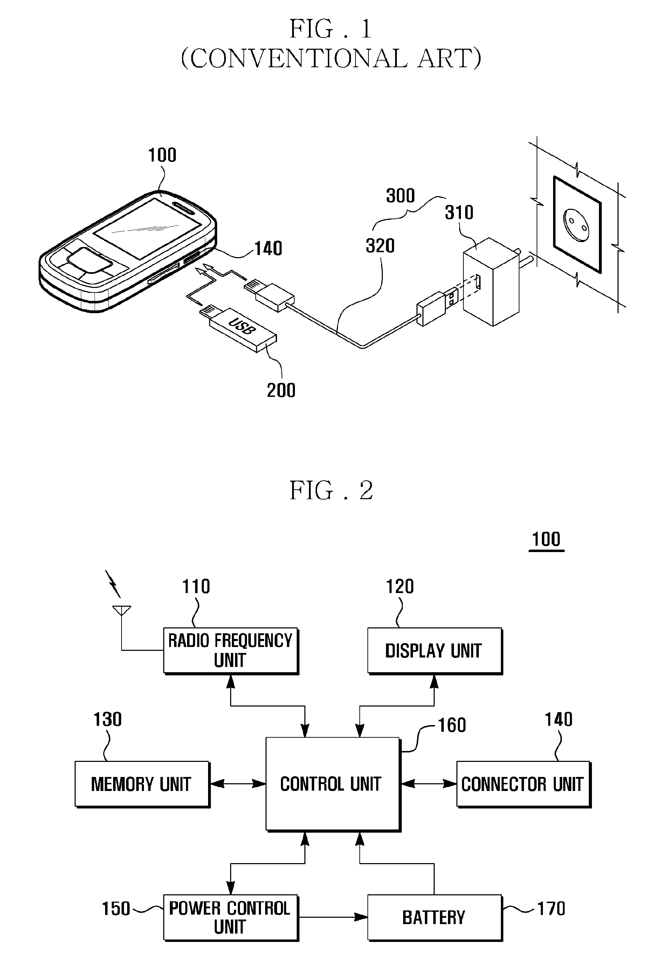

FIGURES 1 through 6, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged mobile terminal.

For the purpose of description, a charger and external storage device are described as an external device connectable to the connector unit of a mobile terminal. However, a notebook computer, personal digital assistant, desk-top computer, and gaming device may also acts as an external device of the present invention. That is, an external device of the present invention is a device that is connectable to the connector unit of the mobile terminal and supports a charge mode to supply electricity or a communication mode to perform communication.

The mobile terminal of the present invention is described as a mobile communication terminal having a radio frequency unit. The mobile terminal may further include a connector unit to connect to an external device for supporting necessary functions of the external device.

The D+ line and D- line of the external storage device connect respectively to the D+ line and D- line of the connector unit, which then connect respectively to the D+ line and D- line of the control unit. A D+ signal line is referred to as a first signal line, and a D- signal line is referred to as a second signal line.

Hereinafter, external devices of the mobile terminal are described.

FIGURE 1 is a diagram illustrating an external storage device and charger connectable to a connector unit of a mobile terminal 100.

Referring to FIGURE 1, the mobile terminal 100 of the present invention automatically switches between a charge mode and a communication mode according to an external device connected to a connector unit 140, and performs operations necessary for the mode.

To be more specific, when the external device connected to the connector unit 140 is an external storage device 200, the mobile terminal 100 activates the communication mode to communicate with the external storage device 200, and receives information stored in the external storage device 200 or sends stored information to the external storage device 200. When the external storage device is a personal computer or notebook, the external storage device can include a connection line such as a cable connectable to the connector unit 140.

When the external device connected to the connector unit 140 is a charger 300, the mobile terminal 100 activates the charge mode and allows the charge current from the charger 300 to flow to the battery for charging. In other words, one end of the charger 300 is connected through a cable 320 to the connector unit 140 and the other end 310 is connected to an outlet for supplying electric power from the outlet to the mobile terminal 100. Preferably, the charger 300 converts high-voltage power from the outlet into low-voltage power acceptable to the mobile terminal 100. For highspeed charging, the charger 300 can supply electric power of maximum rated current within a preset margin acceptable to the mobile terminal 100 and battery.

The cable 320 can include a first connector to connect to the mobile terminal 100, a second connector to connect to the charger 300, and a line to connect the first connector and second connector together. The first connector may include a hook member to secure stable electrical connection to the mobile terminal 100, and further include a release member to control the hook member for easy release. The second connector may have a configuration connectable to a portion of the charger 300 (for example, a USB interface).

As described above, the mobile terminal 100 determines the type of an external device connected to the connector unit 140 and activates the mode corresponding to the determined type to thereby control performance of operations necessary for the external device. Next, the mobile terminal 100 is described in detail.

FIGURE 2 is a block diagram illustrating the mobile terminal 100 according to an exemplary embodiment of the present invention.

Referring to FIGURE 2, the mobile terminal 100 includes a radio frequency unit 110, display unit 120, memory unit 130, connector unit 140, power control unit 150, battery 170, and control unit 160. If the mobile terminal 100 is not a communication terminal, the radio frequency unit 110 may be removed as an unnecessary element.

The radio frequency unit 110 sends and receives signals related to voice communication, short message service and multimedia message service, and data communication. The radio frequency unit 110 converts voice, audio or control data into a radio signal for transmission, and converts a received radio signal into voice, audio or control data for output. Thereto, the radio frequency unit 110 includes a radio frequency transmitter for upconverting the frequency of a signal to be transmitted and amplifying the signal, and a radio frequency receiver for low-noise amplifying a received signal and downconverting the frequency of the received signal. When the charger 300 is connected to the connector unit 140, the radio frequency unit 110 can directly receive power for operation from the charger 300 under the control of the control unit 160. When the external storage device 200 is connected to the connector unit 140, the radio frequency unit 110 can be send information stored in the external storage device 200 to the outside under the control of the control unit 160.

The display unit 120 displays image data from the control unit 160, user data requested by the user, and screen data related to supplementary functions. The display unit 120 can display basic screens for the mobile terminal 100 such as the idle screen, menu screen, and display screen for lists of information stored in the memory unit 130. The display unit 120 may include a panel of liquid crystal display (LCD) devices. If the panel has a touch screen capability, the display unit 120 can also act as an input device. In particular, the display unit 120 can display a different screen according to an external device connected to the connector unit 140. When the charger 300 is connected to the connector unit 140, the display unit 120 can display a pop-up message or image indicating attachment of the charger 300 for a preset duration, and display a battery level indicator in real time while being charged by the charger 300. When the external storage device 200 is connected to the connector unit 140, the display unit 120 can display a pop-up message or image indicating attachment of the external storage device 200, and read and display a list of information stored in the external storage device 200 under the control of the control unit 160. During identification of information stored in the external storage device 200, the display unit 120 can display an image or icon indicating a communication mode for signal transmission to and signal reception from the external storage device 200. When the external device is detached from the connector unit 140, the display unit 120 can display an image corresponding to an alarm indicating detachment of the external device. Such an alarm is preferably activated for a short duration. After alarm activation for a short duration, the display unit 120 can transition to a sleep mode and cut off power used for light emission under the control of the control unit 160.

The memory unit 130 can store an operating system for booting the mobile terminal 100, and application programs for functions of the mobile terminal 100 such as file playback, photographing and broadcast reception. The memory unit 130 can also store user data generated from utilization of the mobile terminal 100, and received through a communication channel. Thereto, the memory unit 130 may include a program storage section and data storage section.

The program storage section stores application programs to support various functions described above, and stores, in particular, application programs to support external devices. For example, if the mobile terminal 100 supports a mobile commerce application and the mobile commerce module is an external device, the mobile terminal 100 stores an application program to support mobile commerce services. Likewise, when a notebook computer as an external device connects to the mobile terminal 100, the program storage section can store an application program to support communication with the notebook computer including automatic connection and data transfer. In this case, the application program may have been pre-stored, or received from the notebook computer and stored.

The data storage section stores data generated from execution of the programs, and setting information related to mobile commerce. The data in the data storage section may be structured in the form of a database.

The connector unit 140 is connectable to the cable 320 leading to an external device, and to the external storage device 200. The connector unit 140 is preferably connectable to the first connector of the cable 320. The connector unit 140 preferably includes a connection terminal corresponding to a pin of the first connector of the cable 320, and a member to support stable connection of the first connector after attachment. That is, when the first connector includes a hook member, the connector unit 140 can include a stepped portion that provides a guide function for easy fitting of the hook member and a hook function for stable connection of the hook member after attachment. The connector unit 140 may vary according to the type, design and version of the mobile terminal 100, and may have, for example, 10 pins, 20 pins or 24 pins. The pins of the connector unit 140 are common pins, which may be allocated to different external devices.

When the charger 300 is connected, the power control unit 150 controls power supply from the charger 300 to the battery 170 through the control unit 160 or directly thereto. The power control unit 150 can control the amount of charge current from the charger 300 for suitably charging the battery 170. In other words, the power control unit 150 can control the amount of charge current from the charger 300 according to the charge level of the battery 170. That is, when the charge level of the battery 170 is too low, the power control unit 150 controls the charge operation to maximize the amount of charge current. When the charge level of the battery 170 is higher than or equal to a preset value, the power control unit 150 controls the charge operation to decrease the amount of charge current according to the charge level.

The battery 170 supplies necessary power to the elements of the mobile terminal 100. The battery 170 may be made of a rechargeable secondary cell or electrochemical cell. The battery 170 is charged by charge current from an external device (i.e., the charger 300) under the control of the power control unit 150.

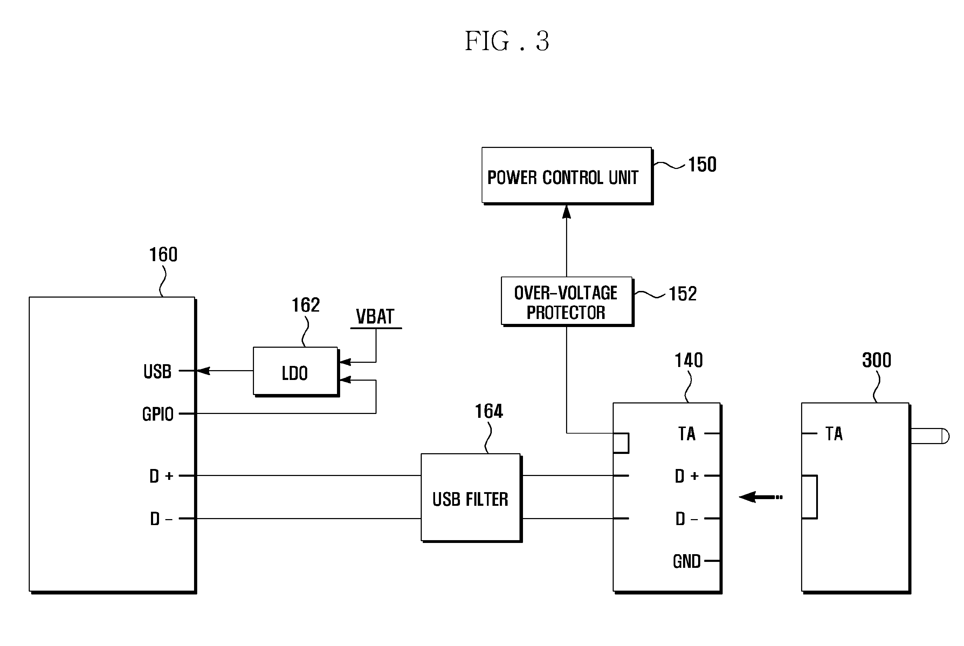

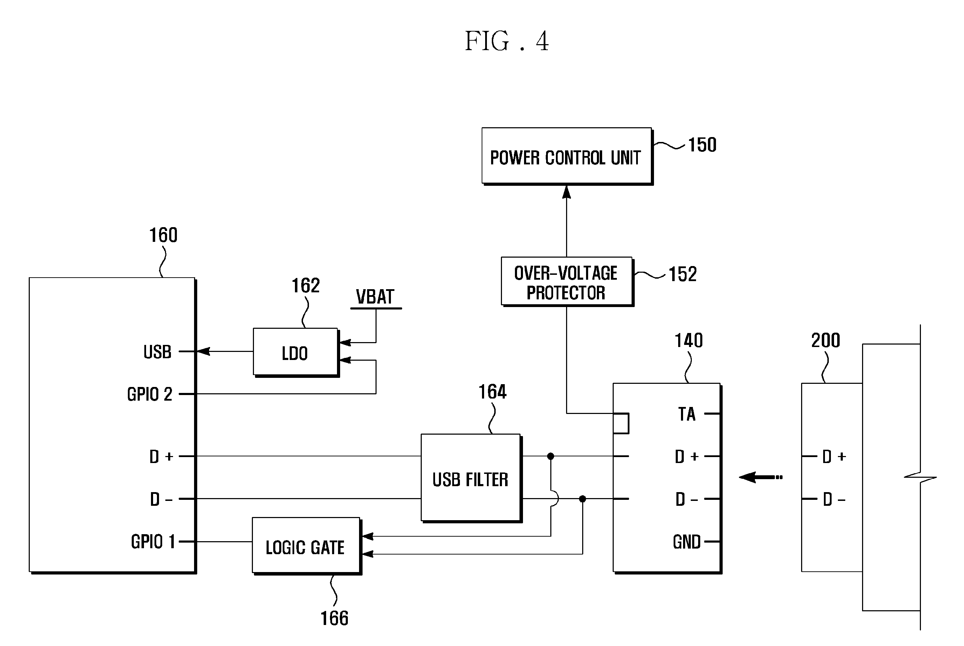

The control unit 160 controls the overall operation of the mobile terminal 100 and signal exchange between the elements of the mobile terminal 100. In particular, the control unit 160 controls signal exchange between an external device connected to the connector unit 140, power control unit 150, and battery 170. The control unit 160 identifies the type of an external device connected to the connector unit 140, and controls the elements of the mobile terminal 100 according to the identified type. Identification of the type of an external device and control of the mobile terminal 100 according the identified type are described in connection with FIGURES 3 and 4.

FIGURE 3 is a block diagram of an embodiment of control circuitry and associated elements of the mobile terminal 100. FIGURE 4 is a block diagram of another embodiment of control circuitry and associated elements of the mobile terminal 100. FIGURES 3 and 4 depict control of the mobile terminal 100 according to a connected external device. If a different function of the mobile terminal 100 is used or an additional external device is employed, additional elements can be included. In FIGURE 3, the charger 300 is connected. In FIGURE 4, the external storage device 200 is connected.

Referring to FIGURE 3, the control circuitry of the mobile terminal 100 includes the control unit 160, power control unit 150, and connector unit 140, and can further include the charger 300 connected to the connector unit 140. The control circuitry can further include an over-voltage protector 152 between the power control unit 150 and connector unit 140 to prevent system damage due to a rapid increase in power from the charger 300. The charger 300 can include a high-voltage signal line (TA) to deliver high-voltage power and a signal line short-circuiting the first signal line (D+) and second signal line (D-) together, and can further include a ground line. The control circuitry can further include a USB filter 164 between the connector unit 140 and control unit 160, which connects signal lines together for transmitting signals and filters signals according to a communication mode. A low dropout (LDO) regulator 162 regulates a voltage from the battery 170 or a signal from the external storage device 200 connected to the connector unit 140, and sends the regulated voltage or signal to a communication port (i.e., USB port).

When the charger 300 is attached to the connector unit 140, the high-voltage signal line (TA) of the charger 300 is connected to that of the connector unit 140. The connector unit 140 can send a high-voltage signal through the over-voltage protector 152 to the power control unit 150. The first signal line (D+) and second signal line (D-) of the connector unit 140 are connected to a signal line of the charger 300, and become short-circuited together. Accordingly, the control unit 160 can determine whether an attached external device is the charger 300 by utilizing the first signal line (D+) and second signal line (D-) of the connector unit 140. In other words, because of a short-circuited signal line of the charger 300, the first signal line (D+) and second signal line (D-) of the connector unit 140 become short-circuited together. The control unit 160 sends a signal of a preset phase through the first signal line (D+), detects a signal on the second signal line (D-), and compares the phases of the signals to each other. If the signal sent through the first signal line (D+) and the signal detected on the second signal line (D-) have the same phase, the control unit 160 can identify the external device attached to the connector unit 140 as the charger 300.

As described above, in the control circuitry of the mobile terminal 100 in FIGURE 3, whether the external device attached to the connector unit 140 is a charger 300 can be identified on the basis of a signal loop composed of a port of the control unit 160, a signal line of the connector unit 140, and a short-circuited signal line formed at the charger 300. After identification of attachment of the charger 300, the mobile terminal 100 can automatically deliver charge current received through the high-voltage signal line (TA) to the power control unit 150 via the over-voltage protector 152.

Referring to FIGURE 4, the control circuitry of the mobile terminal 100 includes the control unit 160, power control unit 150, and connector unit 140, and can further include the external storage device 200 connected to the connector unit 140. The control circuitry can further include an over-voltage protector 152 between the power control unit 150 and connector unit 140 to prevent system damage due to a rapid increase in power from the charger 300. The external storage device 200 includes a first signal line (D+) and second signal line (D-), and can further include a high-voltage signal line (not shown) for signal exchange and a ground line (not shown). The control circuitry can further include a USB filter 164 between the connector unit 140 and control unit 160, which connects signal lines together for transmitting signals and filters signals according to a communication mode. The control circuitry can further include a logic gate 166, which can identify the type of an external device attached to the connector unit 140 using a voltage difference between the first signal line (D+) and second signal line (D-) of the connector unit 140, and send the identified type to a first general-purpose input/output (GPIO) port GPIO1 of the control unit 160. A low dropout (LDO) regulator 162 regulates a voltage from the battery 170 or a signal from a second GPIO port GPIO2, and sends the regulated voltage or signal to a communication port (i.e., USB port). The second GPIO port GPIO2 outputs a signal activating the LDO regulator 162 according to the type of the external device. That is, if the external device supports a communication mode, the second GPIO port GPIO2 outputs a signal activating the LDO regulator 162.

When the external storage device 200 is attached to the connector unit 140, the first signal line (D+) and second signal line (D-) of the external storage device 200 are respectively connected to the first signal line (D+) and second signal line (D-) of the connector unit 140, and hence signals of different phases are sent to the logic gate 166. If the output of the logic gate 166 is different from the previous output, the control unit 160 determines that the external device attached to the connector unit 140 is not a charger 300 but an external device needing communication. Alternatively, after sending dummy data through at least one of the first signal line (D+) and second signal line (D-), the control unit 160 can identify the type of the external device by checking the presence of a response signal associated with the dummy data. For example, in the case of a charger 300, when dummy data is sent through the signal line, dummy data returns. Hence, the control unit 160 can identify the type of the external device by sending dummy data. This technique can also be applied to the case in FIGURE 3. When a distinctive response is not present after sending dummy data, the control unit 160 can control a charge operation to charge the battery 170 with charge current of, for example, about 500mA. As described before in connection with FIGURE 3, the control unit 160 may check a phase change through the first signal line (D+) and second signal line (D-) to identify the type of the external device.

The control unit 160 can detect attachment of an external device by sensing a change in voltage of selected pins. For example, when a pull-up voltage is applied to a selected pin or a high voltage is periodically applied to a selected pin, attachment of an external device can convert the pull-up voltage into a pull-down voltage or change the magnitude of the high voltage. The control unit 160 can determine attachment of an external device on the basis of such a signal change. Thereafter, the control unit 160 can determine the type of the attached external device utilizing the first signal line (D+) and second signal line (D-) as described before.

Hereinabove, the configuration of the mobile terminal and external devices are described. Next, a method of controlling the mobile terminal according to the type of the attached external device is described.

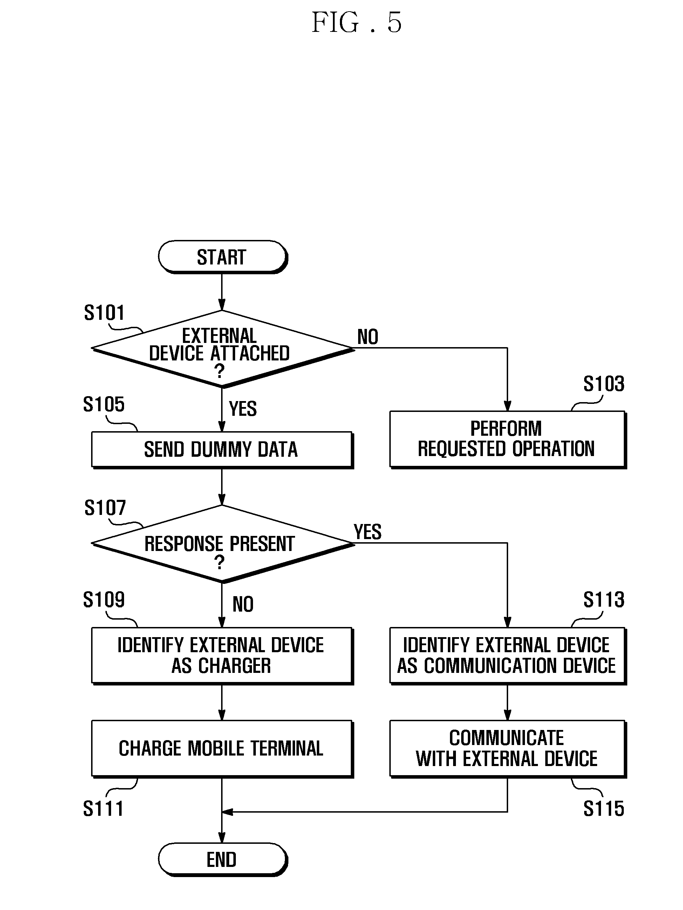

FIGURE 5 is a flow chart illustrating a method of controlling the mobile terminal according to the type of a connected external device.

Referring to the control method of FIGURE 5, the mobile terminal 100 checks attachment of an external device (S101). To be more specific, after application of a pull-up voltage to the connector unit 140 to which an external device is attached, the mobile terminal 100 can detect attachment of an external device on the basis of a change in the pull-up voltage due to attachment of the external device. When an external device is attached to the connector unit 140 after application of a pull-up voltage, the pull-up voltage changes as the associated current flows into the external device. In particular, when the connector unit 140 is connected to the ground terminal of an external device after application of a pull-up voltage to a selected pin of the connector unit 140, the pull-up voltage can change to a pull-down voltage. Here, the resistance of the selected pin for the pull-up voltage is preferably higher than that of the ground terminal of the external device. Alternatively, to identify attachment of an external device, the mobile terminal 100 may apply a high voltage to a selected pin of the connector unit 140 and check the form of a response voltage associated with the applied high voltage.

If an external device is not attached, the mobile terminal 100 performs a requested operation (S103). For example, the mobile terminal 100 can perform various operations related to idle screen display, keeping of a sleep mode, making a voice or video call, broadcast reception, and message transmission. During these operations, the mobile terminal 100 preferably monitors occurrence of an event related to attachment of an external device.

If an external device is attached, the control unit 160 of the mobile terminal 100 sends dummy data through at least one of the first signal line (D+) and second signal line (D-) of the connector unit 140 (S105). The dummy data is sent to check a response from the external device, and may be random data generated from the control unit 160 or preset data. The control unit 160 checks for the presence of a response corresponding to the dummy data (S107).

If no response is present, the control unit 160 identifies the external device as a charger 300 (S109). The dummy data sent by the mobile terminal 100 can return via the short-circuited path of the charger 300. Hence, the return of the dummy data can be regarded as an absence of a response.

The mobile terminal 100 charges the battery 170 with charge current from the charger 300 (S111). The control unit 160 controls the power control unit 150 to adjust the amount of charge current from the charger 300 according to the charge level of the battery 170. That is, when the charge level of the battery 170 is too low, the power control unit 150 controls the charge operation to maximize the amount of charge current. When the charge level of the battery 170 is higher than or equal to a preset level, the power control unit 150 controls the charge operation to decrease the amount of charge current to a preset value. In addition, the over-voltage protector 152 can prevent an over-voltage power flow from the charger 300 or due to static electricity.

If a distinctive response is present at step S107, the control unit 160 identifies the external device as a communication-supporting device such as an external storage device 200, personal computer, or notebook (S113). The mobile terminal 100 communicates with the external device according to, for example, USB communication (S115).

As described above, in the control method of FIGURE 5, the type of the external device is identified by the presence of a distinctive response after sending dummy data, and the charge mode or communication mode is automatically initiated according to the identified device type.

FIGURE 5 is a flow chart illustrating another method of controlling the mobile terminal according to the type of a connected external device.

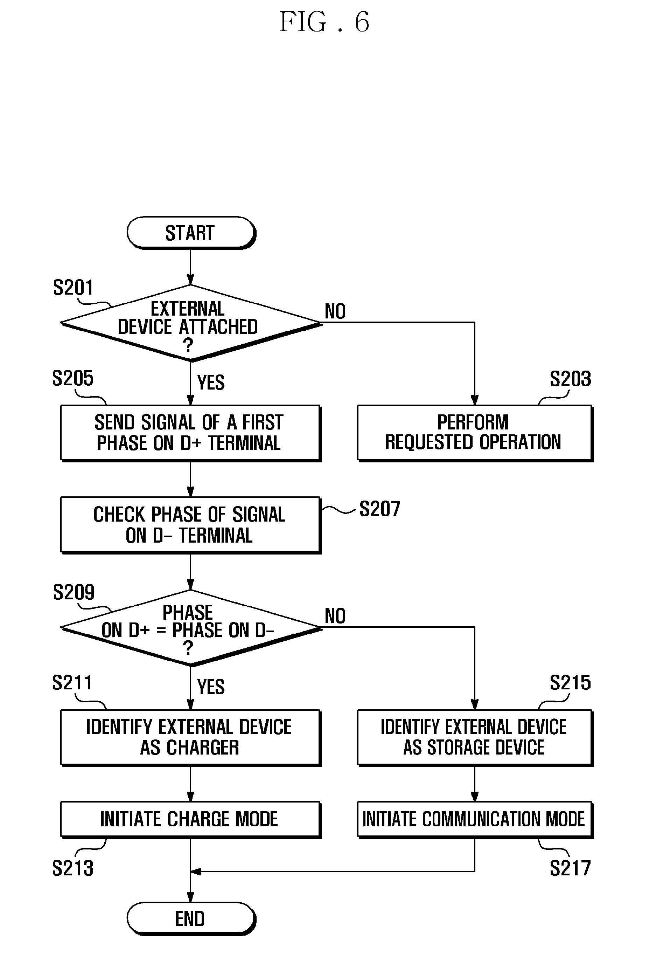

Referring to the control method of FIGURE 6, the mobile terminal 100 checks for the attachment of an external device (S201). Attachment of an external device can be checked in a similar manner described in step S101 of FIGURE 5. If an external device is not attached, the mobile terminal 100 performs a requested operation such as call processing or file playing (S203).

If an external device is attached, the mobile terminal 100 sends a signal of a first phase through the first signal line (D+) (S205). The mobile terminal 100 checks the phase of a signal on the second signal line (D-) (S207). The first signal line (D+) and second signal line (D-) of the control unit 160 are respectively connected to the first signal line (D+) and second signal line (D-) of the connector unit 140. Hence, the mobile terminal 100 may send a signal of a first phase through the second signal line (D-) and check the phase of a signal on the first signal line (D+).

The mobile terminal 100 compares the phase of the signal on the first signal line (D+) with the phase of the signal on the second signal line (D-) (S209). If the phase on the first signal line (D+) is equal to that on the second signal line (D-), the mobile terminal 100 identifies the external device as a charger 300 (S211), and initiates a charge mode using the charger 300 (S213). If the phase on the first signal line (D+) is not equal to that on the second signal line (D-), the mobile terminal 100 identifies the external device as an external storage device 200 (S215), and initiates a communication mode to communicate with the external storage device 200 (S217).

As described above, in the control method of FIGURE 6, the type of the external device can be identified by sending a signal of a first phase through the first signal line, checking the phase of a signal on second signal line, and comparing the phase on the first signal line with that on the second signal line.

Although the present disclosure has been described with an exemplary embodiment, various changes and modifications may be suggested to one skilled in the art. It is intended that the present disclosure encompass such changes and modifications as fall within the scope of the appended claims.

## Claims

1. A method of controlling a mobile terminal, comprising:
checking for an attachment of an external device(S101);
sending, when an external device is attached, a dummy data to the external device(S105);
checking for a presence of a response associated with the dummy data from the external device(S107);
determining a type of the external device on a basis of the presence of a response(S109,S113); and
activating one of a charge mode and a communication mode according to the type of the external device(S111,S115).

2. The method of claim 1, wherein determining a type of the external device comprises:
identifying, when a response associated with the dummy data is present, the external device as a device supporting a communication mode; and
identifying, when a response associated with the dummy data is absent, the external device as a device supporting a charge mode.

3. The method of claim 2, wherein activating a charge mode comprises adjusting an amount of a charge current from a charger according to a charge level of a battery in the mobile terminal to charge the battery.

4. The method of claim 3, wherein activating a charge mode comprises:
charging, when the charge level of the battery is lower than or equal to a preset value, the battery with a maximum amount of charge current from the charger; and
charging, when the charge level of the battery is higher than the preset value, the battery with a preset amount of charge current from the charger.

5. The method of claim 1, wherein
sending the dummy data to the external device comprises sending a signal of a first phase through one of a first signal line and second signal line connected to the external device,
checking for a presence of a response associated with the dummy data comprises sensing a second phase of a signal on the other signal line and comparing the first phase with the second phase, and
determining a type of the external device comprises determining the type of the external device according to an equality between the first phase and second phase.

6. The method of claim 5, wherein determining the type of the external device comprises:
identifying, when the first phase is different from the second phase, the external device as a device supporting a communication mode; and
identifying, when the first phase is equal to the second phase, the external device as a device supporting a charge mode.

7. A mobile terminal comprising:
a connector unit (140) to which an external device is attached; and
a control unit (160) sending a preset signal to the external device attached to the connector unit (140), determining the type of the external device on a basis of a change in the sent signal, and activating at least one of a charge mode and a communication mode according to the type of the external device.

8. The mobile terminal of claim 7, wherein the preset signal is a dummy data sent by the control unit (160) to the external device.

9. The mobile terminal of claim 8, wherein the control unit (160) identifies, when a response associated with the dummy data is present, the external device as a device supporting a communication mode, and identifies, when a response associated with the dummy data is absent or the dummy data is returned without change, the external device as a device supporting a charge mode.

10. The mobile terminal of claim 7, wherein the preset signal is a signal of a first phase sent through one of a first signal line and second signal line between the control unit (160) and the external device.

11. The mobile terminal of claim 10, wherein the control unit (160) senses a second phase of a signal on the other signal line, identifies, when the first phase is equal to the second phase, the external device as a device supporting a charge mode, and identifies, when the first phase is different from the second phase, the external device as a device supporting a communication mode.

12. The mobile terminal of claim 10, further comprising a logic gate (166) between the connector unit (140) and control unit (160) to send to the control unit (160) a signal identifying the type of the external device on a basis of output of the first signal line and second signal line.

13. The mobile terminal of claim 7, further comprising, when the external device is a device supporting a charge mode, at least one of:
a power control unit (150) controlling an amount of a charge current;
a battery (170) being charged with a charge current from the external device; and
an over-voltage protector (152) preventing an over-voltage current from the external device.

14. The mobile terminal of claim 7, further comprising, when the external device is a device supporting a communication mode, a memory unit (130) temporarily or semi-permanently storing signals sent to and received from the external device.
